# EUROPEAN PATENT SPECIFICATION

(11) **EP 1 457 372 B1**
(45) Date of publication and mention of the grant of the patent: **24.01.2007**
(21) Application number: 04101039.8
(22) Date of filing: 12.03.2004
(51) Int. Cl.: B60J 5/04, B60R 13/02

(54) **A door for a motor vehicle**
Fahrzeugtür
Porte pour un véhicule automobile

(30) Priority: 14.03.2003 IT TO20030192
(43) Date of publication of application: 15.09.2004
(73) Proprietor: INTIER AUTOMOTIVE CLOSURES S.p.A, 10090 Cascine Vica-Rivoli (To) (IT)
(72) Inventor: Pellegrini, Giorgio, 10036 Settimo Torinese (IT)
(74) Representative: Jorio, Paolo

(56) References cited:
- EP-A- 0 427 152
- EP-A- 1 138 535
- EP-A- 1 197 366
- WO-A-00/53446
- WO-A-02/076776
- US-A- 5 906 409

## Description

The present invention relates to a door for a motor vehicle.

As is known, the side doors of motor vehicles comprise a metal supporting framework, which is in turn formed by a frame-like top portion, which delimits a window opening designed to be closed by a sliding window, and by a box-type bottom portion, which is open at the top in the direction of the window opening itself and is defined by an internal wall and an external wall, both of which are made of sheet metal, peripherally connected together. The internal wall and the external wall delimit a compartment, which houses the sliding window when the latter is lowered, and some functional elements, such as for instance the window-regulator device and the lock for closing the door.

During assembly of the door, said functional units are inserted in the compartment of the bottom box-type portion through corresponding openings made in the internal wall and are fixedly connected to the framework. Once the aforesaid functional units have been assembled, the internal wall of the bottom box-type portion is coated with a finishing panel, which is generally made of plastic material and normally incorporates finishing members, such as arm-rests, handles or other control members, etc.

Recently, with the purpose of reducing both the stay time of the motor vehicles on the assembly lines and the subsequent testing and adjustment operations, vehicle doors have been made in which the majority of the internal wall of the bottom box-type portion is removed and replaced by a pre-assembled panel, which is connected to the remaining part of the internal wall itself by means of screws or similar releasable connecting elements and carries the lock and the window-regulator device pre-assembled.

The supporting framework of the bottom box-type portion of a door of the type described above is therefore reduced, internally, to a frame made of sheet metal, which is peripherally welded to the external wall and delimits a window opening designed to be closed, once assembly is completed, by the pre-assembled panel.

Although known doors of the type described above have proved satisfactory and are currently widely used, they present a number of drawbacks of a technical and economic nature.

In fact, making the window opening, through the internal wall, for installing the aforementioned pre-assembled panel considerably reduces the torsional resistance of the supporting framework of doors of this sort, imposing on manufacturers the need for costly solutions for automatic handling thereof during the steps of assembly and welding. In addition, the presence of the aforesaid pre-assembled panel does not exclude the presence of the internal-finishing panel, which, since it must be equipped with the necessary control members of the functional units carried by the pre-assembled panel itself, must be functionally connected thereto on the assembly line.

To overcome the above drawbacks, the present applicant has developed a particular type of door illustrated in the Italian patent No. 1238528, in which only a top relatively reduced band of the internal wall of the bottom box-type portion has been removed to make an elongated substantially rectangular opening designed to be closed by a self-supporting panel of corresponding dimensions, in such a way that the bottom part of the door preserves a substantially shell-like structure with a relatively high torsional stiffness.

In practice, the internal wall of the bottom box-type portion of the door is coated with two internal-finishing panels. One of said panels is applied in the top area of the internal wall provided with opening and carries pre-assembled the various functional units of the door, whilst the other panel is applied in the bottom area of the internal door itself and is connected, at its own top edge, to a bottom edge of the overlying panel.

The door thus defined not only preserves all the advantages deriving from the use of a panel which carries pre-assembled all the accessories of the door itself, but enables, at least in a position corresponding to the aforesaid self-supporting panel, the elimination of a finishing panel and the suppression of all the operations required for functional connection of such a finishing panel to the self-supporting panel itself.

The solution analysed above, albeit extremely advantageous from the standpoints referred to, may, however, undergo further improvements, above all as regards the times and costs for assembly of the self-supporting panel. In fact, pre-assembly of the various functional units of the door on the corresponding panel entails an entire series of preparatory operations for fixing to the panel itself both the supporting and retention elements on which the aforesaid functional units are subsequently to be applied and the necessary electrical cables for supplying said units.

The purpose of the present invention is to provide a door for a motor vehicle, which will be free from the drawbacks that are linked to known doors and are specified above.

The aforesaid purpose is achieved by the present invention in that it relates to a door for a motor vehicle comprising:
- a supporting framework, which in turn comprises a frame-like top portion, which delimits a window opening, and a box-type bottom portion, which is open in the direction of the window opening itself and is defined by an internal wall and an external wall peripherally connected together;
- a mobile window, which can slide between a lowered position, in which it is contained inside the box-type bottom portion, and a raised position, in which it closes the window opening of said top portion;
- a window-regulator device for raising and lowering said mobile window, which can be inserted, through an opening section of said internal wall, inside said bottom portion and can be fixed to the bottom portion itself;
- a lock for blocking said door in a closed position, which can also be inserted, through said opening section of said internal wall, inside said bottom portion and can be fixed to the bottom portion itself;
- a first internal-finishing panel, which is connected in a releasable way to a top area of said internal wall on the opposite side to the one facing said external wall and is provided with first and second attachment means for supporting said lock and said window-regulator device; and
- a second internal-finishing panel, connected in a releasable way to the remaining part of said internal wall on the same side as said first panel;
said door being characterized in that said first panel and said first and second attachment means are made of a single piece by moulding and define integrally at least one channel for housing at least one elongated connection member connected at least to one between said lock and said window-regulator device.

For a better understanding of the present invention, there will now be described in what follows a preferred embodiment provided purely by way of nonlimiting example, with reference to the annexed drawings, in which:
- Figures 1 and 2 illustrate, in an exploded side view and during assembly, a door for a motor vehicle built according to the present invention, with parts removed for reasons of clarity;
- Figure 3 is a side elevation in a position of use of an internal-finishing panel of the door according to the invention, which carries a series of functional members of the door itself, viewed from the opposite side to the one illustrated in Figures 1 and 2;
- Figure 4 illustrates, at an enlarged scale, the internal-finishing panel of Figure 3 without the functional members of the door;
- Figure 5 is a cross-sectional view, at an enlarged scale, taken according to the line V-V of Figure 2, with parts removed for reasons of clarity;
- Figure 6 is a cross-sectional view, at an enlarged scale, taken according to the line VI-VI of Figure 3; and
- Figure 7 is a cross-sectional view taken according to the line VII-VII of Figure 3.

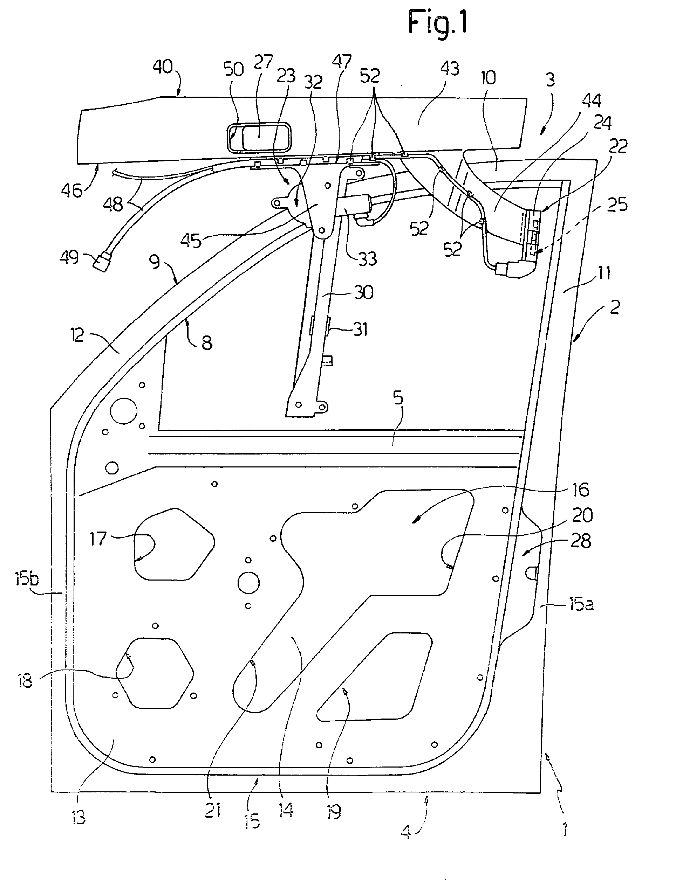

In Figures 1, 2 and 3, the reference number 1 designates, as a whole a side door for a motor vehicle (not illustrated), which comprises, in a known way a supporting framework 2, which is in turn formed by a top portion 3 and a bottom portion 4, separated from one another by a substantially horizontal cross member 5, and defines a longitudinal opening 6 (see Figure 5) through which a mobile window 7 is slidably mounted.

The top portion 3 (see Figure 1) defines a window opening 8 surrounded by a frame 9, which is substantially U-shaped and is set with its concavity facing downwards and in the direction of the cross member 5, to which the frame 9 is fixed at its own bottom end. The frame 9 comprises a top cross member 10, which is substantially parallel to the cross member 5 and is connected to a rear end of the cross member 5 itself by means of a first substantially vertical upright 11 and to a front end of the cross member 5 by means of a second inclined upright 12. The uprights 11 and 12 and the cross member 10 carry, connected to one of their internal edges, a run channel (not visible in the attached figures) for containing and guiding the mobile window 7.

The bottom portion 4 of the door 1 is box-shaped and is defined by an internal wall 13 and an external wall 14, which are convex, both of which are made of sheet metal, the side and bottom peripheral edges of which are connected together to form a frame 15, and the top edges of which define the cross member 5.

As may be seen in Figures 1, 2, 3 and 5, the internal wall 13 of the bottom portion 4 of the door 1 has four openings 16, 17, 18 and 19, one of which (16) extends substantially in an intermediate area of the internal wall 13 itself, whilst the others (17, 18, 19), which have decidedly smaller dimensions than those of the opening 16, extend inside the latter.

In particular, the opening 16 basically has the shape of an upturned L formed by a first stretch 20 having substantially the profile of a parallelogram and extending between the vertical centre line of the internal wall 13 and a rear stretch 15a of the frame 15, on the prolongation of which there extends the upright 11, and by an inclined elongated second stretch 21, which extends from the stretch 20 downwards and in a position adjacent to the aforesaid vertical centre line.

The openings 17 and 18, which have, in the case illustrated, respectively, a pentagonal profile and a hexagonal profile, extend from one side of the opening 16 facing a front stretch 15b of the frame 15, on the prolongation of which there extends the upright 12, and are made, respectively, in a top area and in a bottom area of the internal wall 13.

The opening 19 has a substantially trapezoidal profile and is set on the opposite side of the stretch 21 of the opening 16 with respect to the opening 18.

The opening 18 is designed to enable application of a loudspeaker (not illustrated) of a stereo system (not illustrated either) of the motor vehicle, whilst the opening 19 chiefly has a function of lightening the supporting framework 2. The functions of the openings 16 and 17 will, instead, be clarified in the ensuing description.

The door 1 further comprises a lock 22 for blocking the door 1 itself in a closed position, and a window-regulator device 23 for sliding the window 7 between a lowered position, in which it is contained inside the box-type bottom portion 4, and a raised position, in which it closes the window opening 8 of said top frame-like portion 3.

The lock 22 and the window-regulator device 23 are inserted, through the opening 16 inside said bottom box-type portion 4 in the way described in detail in what follows and are fixed to the bottom portion 4 itself by releasable means of constraint, for example screws.

The lock 22 and the window-regulator device 23, which are in themselves known, are described in what follows only as far as this is necessary for an understanding of the present invention.

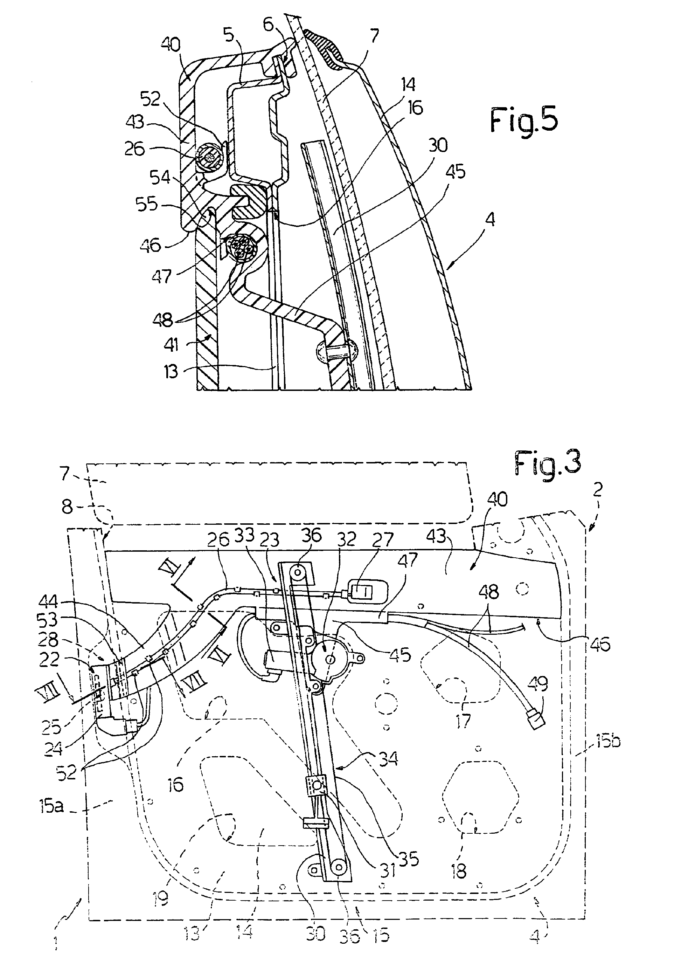

In particular, the lock 22 (see Figures 1, 2 and 3), which is, for example, of the type described and illustrated in any one of the patents EP-B-718455, EP-B-712985, and EP-B-632178 basically comprises a supporting and containing shell or casing 24, in the case in point having a substantially flattened parallelepipedal conformation, and an electromechanical locking assembly 25 (represented schematically by the dashed line in Figures 1, 2, and 3), which is designed to engage in a releasable way with a striker (not illustrated), which is fixed to an upright of the door 1 and is connected, by means of an elongated transmission element, in the case in point a flexible transmission cable 26 of a Bowden type (see Figures 3 and 5), to a handle 27 for opening the door so as to be controlled by said handle 27.

The lock 22 is designed to be housed and fixed, for instance by means of screws, within a purposely provided shaped seat 28 made inside the bottom box-type portion 4 of the door 1 in a position corresponding to the front stretch 15b of the frame 15.

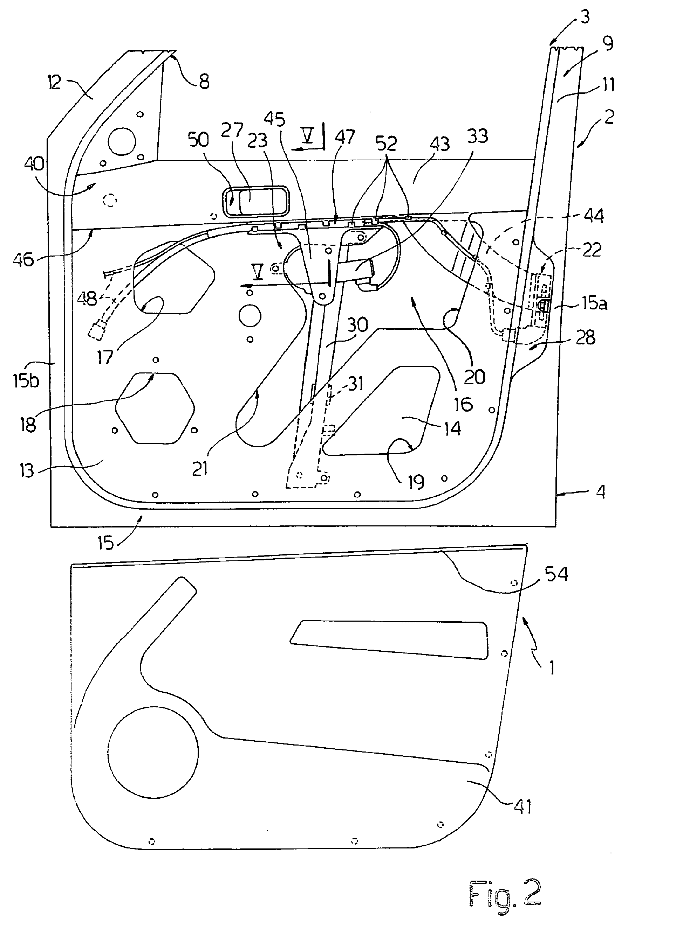

The window-regulator device 23 (see Figures 1, 2, 3 and 5) basically comprises an elongated guide element 30 housed inside the bottom box-type portion 4 and fixed in a vertical position (see Figures 2, 3 and 5) to the internal wall 13 in a conventional way, for example by means of screws, a sliding block 31 mounted in a slidable way on the guide element 30 and fixedly constrained to the mobile window 7, and a unit 32 for moving said sliding block 31 itself.

In particular, the unit 32 includes an electric motor 33 and a cable-type drawing assembly 34, which, in turn, comprises a cable 35, which fixedly supports the sliding block 31 and is able to run on pulleys 36 mounted in an angularly rotatable way and in an axially fixed position on the guide element 30.

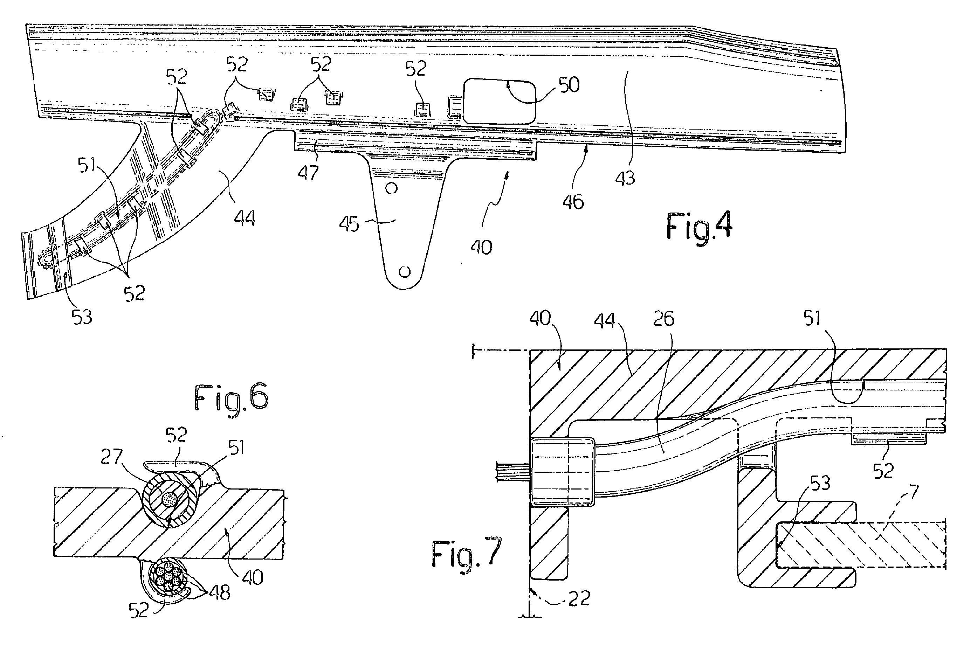

With reference to Figures 1, 2, 3, 4, and 5, the door 1 further comprises a pair of internal-finishing panels 40, 41, which are made of plastic material, for instance polypropylene, and are applied on a surface of the internal wall 13 of the bottom portion 4 on the opposite side to the one facing the external wall 14.

In particular, the panel 40 is releasably connected by engagement means of a known type (not illustrated), for example snap-action pins, rivets, or screws, to a top band of the internal wall 13 defined approximately by the cross member 5, and carries pre-assembled, as illustrated in Figures 1, 2, 3 and 5, the lock 22, the window-regulator device 23, and the handle 27.

The panel 41 coats, instead, the remaining part of the internal wall 13, is connected at the top to the panel 40 and, in a way similar to what is described in the Italian patent No. 1238528 performs the function of providing protection from any water coming from outside the motor vehicle.

According to an important aspect of the present invention, the panel 40 is made of a single piece by moulding, and comprises: a main portion 43, which is designed to coat the aforesaid top band of the internal wall 13 and therefore has a substantially rectangular conformation elongated in the horizontal direction; and a pair of bracket portions 44, 45, which project in cantilever fashion at the bottom and in the direction of the internal wall 13 from a bottom edge 46 of the main portion 43 and carry pre-assembled the lock 22 and the window-regulator device 23, respectively.

In particular, the bracket portion 44 basically consists of an arm having a curvilinear profile, which projects from an end area of the bottom edge 46 of the main portion 43, which is adjacent, in use, to the top stretch 15b of the frame 15 and carries the lock 22 at its own free end. As may be seen in particular from Figures 2 and 3, the bracket portion 44 is designed to be inserted, with its own free end, inside the seat 28 of the rear stretch 15a of the frame 15 in order to enable fixing of the lock 22 to the rear stretch 15a itself.

The bracket portion 45 extends from a median area of the bottom edge 46 of the main portion 43, has an external profile substantially shaped like an isosceles triangle with a rounded vertex, and is provided with a pair of holes for fixing the guide element 30 of the window-regulator device 23.

Both the lock 22 and the window-regulator device 23 are applied on the respective bracket portions 44 and 45 on the side thereof facing the internal wall 13.

Advantageously, the panel 40 defines integrally, in a position between the bottom edge 46 of the main portion 43 and the bracket portion 45, a channel 47 having a substantially C-shaped cross section for housing a harness of electrical cables 48, which can be connected, by means of a connector 49, to the electrical-wiring system (not illustrated) of the motor vehicle and designed to supply the lock 22, the window-regulator device 23, and other electrical loads of the door 1.

Insertion inside the bottom portion 4 of the part of the wiring harness 48 provided with the connector 49 is through the opening 17 (see Figure 2).

The panel 40 further defines, along the main portion 43 and in a position adjacent to the bracket portion 45, a seat 50 for housing the handle 27.

According to a preferred embodiment, the transmission cable 26 which connects the handle 27 to the lock 22 is housed, in a position corresponding to the area in which it extends between the internal wall 13 and the window 7, within a channel 51 made integrally along the bracket portion 44 on the side thereof facing the internal wall 13. In this way, access to the transmission cable 26 in order to force the lock 22 using implements inserted between the mobile window 7 and the internal wall 13 of the door 1 is prevented.

Advantageously, the panel 40 is provided integrally with retention clips 52 for withholding the wiring harness 48 and the transmission cable 26 on the panel 40 itself. In the case illustrated, the clips 52 are made on both sides of the bracket portion 44 and along the channels 47, 51.

According to a further preferred embodiment, the panel 40 defines integrally, along the bracket portion 44 and in the proximity of the area for fixing the lock 22, a channel run 53 for guiding the mobile window 7. As may be seen in Figure 7, the channel 53 projects in cantilever fashion from the bracket portion 44 and has, in cross-sectional view, a the shape of a C with the concavity facing the bracket portion 45.

With reference to Figures 2 and 5, the panel 41 has a substantially rectangular conformation and a height decidedly greater than the height of the main portion 43 of the panel 40, is connected in a releasable way, also in this case via engagement means of a known type, to the internal wall 13 of the box-type bottom portion 4, and has a top edge 54 engaged within a longitudinal groove 55 defined by the bottom edge 46 of the panel 40 itself.

In the step of assembly of the door 1, the panels 40 and 41 are mounted in succession on the internal wall 13 of the box-type bottom portion 4. In particular, the panel 40 is applied in an area corresponding to the top band of the internal wall 13, care being taken to insert the bracket portions 44, 45 provided with the lock 22 and the window-regulator device 23, respectively, within the bottom portion 4 through the stretches 20 and 21, respectively, of the opening 16.

It is now possible to fix the casing 24 of the lock 22 within the seat 28 of the rear stretch 15a of the frame 15 and the guide element 30 of the window-regulator device 23 to the internal wall 13.

The wiring harness 48 which projects from the channel 47 on the side facing the front stretch 15b of the frame 15 is inserted through the opening 17 and connected in a known way to the electrical-wiring system of the motor vehicle.

At the end of the operations described above, the panel 41 is applied on the remaining part of the internal wall 13 and coupled to the panel 40. In particular, as may be seen in Figure 5, the top edge 53 of the panel 41 is inserted within the groove 55 of the bottom edge 46 of the panel 40.

From an examination of the characteristics of the door 1 made according to the present invention, the advantages that this enables are evident.

In particular, the panel 40 defines integrally the supporting portions 44, 45 for the lock 22 and the window-regulator device 23, respectively, the channels 47, 51 for housing the electrical cables 48 and the transmission cable 26, and the channel 53 for guiding the mobile window 7. In practice, the panel 40 thus conceived incorporates, at the moment of its construction, all the pre-arrangements necessary for receiving the various functional units, thus enabling simplified and particularly fast installation of the functional units themselves. In other words, during assembly on the panel 40 of the handle 27, the lock 22, the window-regulator device 23 and all the necessary connections, the operation of riportare providing on the panel 40 itself the brackets and the various supporting and retention members for the components mentioned above is eliminated.

Finally, it is clear that modifications and variations may be made to the door 1 described and illustrated herein, without thereby departing from the sphere of protection of the ensuing claims.

In particular, the panel 40 could define integrally, at ends thereof, two run channels for guiding the mobile window 7 of the same type as the channel 53.

Furthermore, the door 1 could comprise two guide elements 30, which are parallel to one another, slidably support respective sliding blocks 31, and are fixed to respective bracket portions of the panel 40.

## Claims

1. A door (1) for a motor vehicle comprising:
- a supporting framework (2), which in turn comprises a frame-like top portion (3), which delimits a window opening (8), and a box-type bottom portion (4), which is open in the direction of the window opening (8) itself and is defined by an internal wall (13) and an external wall (14) peripherally connected together;
- a mobile window (7), which can slide between a lowered position, in which it is contained inside the box-type bottom portion (4), and a raised position, in which it closes the window opening (8) of said top portion (3);
- a window-regulator device (23) for raising and lowering the mobile window (7), which can be inserted, through an opening section (16) of said internal wall (13), inside said bottom portion (4) and can be fixed to the bottom portion (4) itself;
- a lock (22) for blocking said door (1) in a closed position, which can also be inserted, through said opening section (16) of said internal wall (13), inside said bottom portion (4) and can be fixed to the bottom portion (4) itself;
- a first internal-finishing panel (40) connected in a releasable way to a top area of said internal wall (13) on the opposite side to the one facing said external wall (14) and provided with first and second attachment means (44,45) for supporting said lock (22) and said window-regulator device (23); and
- a second internal-finishing panel (41) connected in a releasable way to the remaining part of said internal wall (13) on the same side as said first panel (40) ;
said door being **characterized in that** said first panel (40) and said first and second attachment means (44, 45) are made of a single piece by moulding and define integrally at least one channel (47, 51) for housing at least one elongated connection member (48, 26) connected at least to one between said lock (22) and said window-regulator device (23).

2. The door according to Claim 1, **characterized in that** said first panel (40) comprises a main portion (43) for covering said top area of said internal wall (13) and a first bracket portion (44) and a second bracket portion (45) projecting in cantilever fashion from said main portion (43), which define, respectively, said first and second attachment means are inserted, in use, inside said bottom portion (4) through said opening section (16).

3. The door according to Claim 1 or Claim 2, **characterized in that** said first panel (40) defines a seat (50) for housing a handle (27) for opening the door, and **in that** said connection member (26) connects said handle (27) to said lock (22).

4. The door according to Claim 3, **characterized in that** said channel (51) is made at least along said first bracket portion (44) of said first panel (40).

5. The door according to Claim 1 or Claim 2, **characterized in that** said connection member (26) comprises at least one electrical cable (48).

6. The door according to Claim 5, **characterized in that** said channel (47) is made along an edge of said first panel (40) and has a basically C-shaped cross section.

7. The door according to any one of the preceding claims, **characterized in that** said first panel (40) comprises integrally a plurality of retention clips (52) for fixing said connection member (48, 26) to the first panel (40) itself.

8. The door according to any one of the preceding claims, **characterized in that** said first panel (40) defines integrally at least one slide guide (53) for said mobile window (7) .

9. The door according to Claim 8, **characterized in that** said guide (53) projects in cantilever fashion from said first bracket portion (44) of said first panel (40).

## Patentansprüche

1. Tür (1) für ein Kraftfahrzeug mit:
einem Tragwerk (2), das wiederum einen rahmenartigen Deck- bzw. Oberbereich (3), der eine Fensteröffnung (8) begrenzt, und einen kastenartigen Bodenabschnitt (4), der in der Richtung der Fensteröffnung (8) selbst offen ist und durch eine Innenwand (13) und einer Außenwand (14) definiert ist, die umfänglich miteinander verbunden sind, aufweist,
einem beweglichen Fenster (7), das zwischen einer abgesenkten Position, in der dieses innerhalb des kastenartigen Bodenabschnitts (4) enthalten ist, und einer angehobenen Position, in der dieses die Fensteröffnung (8) des Deckenabschnitts (3) schließt, gleiten kann,
einer Fensterregelvorrichtung (23) zum Heben und Senken des mobilen Fensters (7), die durch einen Öffnungsabschnitt (16) der Innenwand (13) innerhalb des Bodenabschnitts (4) eingesetzt werden kann und an dem Bodenabschnitt (4) selbst befestigt werden kann,
einem Schloss (22) zum Blockieren der Tür (1) in einer geschlossenen Position, das ebenfalls durch den Öffnungsabschnitt (16) der Innenwand (13) innerhalb des Bodenabschnitts (4) eingesetzt werden kann und an dem Bodenabschnitt (4) selbst befestigt werden kann,
einer ersten Innenendbearbeitungs- bzw. abschlussplatte (40), die auf eine lösbare Weise mit einem Deckbereich der Innenwand (13) auf der gegenüberliegenden Seite zu der einen, die der Außenwand (14) zugewandt ist, verbunden ist und mit einem ersten und zweiten Befestigungsmittel (44, 45) zum Halten des Schlosses (22) und der Fensterregelvorrichtung (23) versehen ist, und
einer zweiten Innenendbearbeitungsplatte (41), die auf eine lösbare Weise mit dem verbleibenden Teil der Innenwand (13) auf derselben Seite wie die erste Platte (40) verbunden ist,
wobei die Tür **dadurch gekennzeichnet ist, dass** die erste Platte (40) und das erste und zweite Befestigungsmittel (44, 45) aus einem einzelnen Stück durch Formen gebildet sind und einstückig bzw. integral zumindest einen Kanal (47, 51) zum Aufnehmen zumindest eines verlängerten Verbindungselements (48, 26) definieren, das zumindest mit einem von dem Schloss (22) und der Fensterregelvorrichtung (23) verbunden ist.

2. Tür nach Anspruch 1, **dadurch gekennzeichnet, dass** die erste Platte (40) einen Hauptabschnitt (43) umfasst, um den Deckbereich der Innenwand (13) abzudecken, und einen ersten Klammerabschnitt (44) und einen zweiten Klammerabschnitt (45), die auf freitagende bzw. auskragende Weise von dem Hauptabschnitt (43) vorstehen, die jeweils definieren, wobei das erste und zweite Befestigungsmittel bei Gebrauch innerhalb des Bodenabschnitts (4) durch den Öffnungsabschnitt (16) eingesetzt sind.

3. Tür nach Anspruch 1 oder 2, **dadurch gekennzeichnet, dass** die erste Platte (40) einen Sitz (50) zum Aufnehmen eines Griffs (27) zum Öffnen der Tür definiert, und **dadurch**, dass das Verbindungselement (26) den Griff (27) mit dem Schloss (22) verbindet.

4. Tür nach Anspruch 3, **dadurch gekennzeichnet, dass** der Kanal (51) zumindest entlang dem ersten Klammerabschnitt (44) der ersten Platte (40) gefertigt ist.

5. Tür nach Anspruch 1 oder 2, **dadurch gekennzeichnet, dass** das Verbindungselement (26) zumindest ein elektrisches Kabel (48) aufweist.

6. Tür nach Anspruch 5, **dadurch gekennzeichnet, dass** der Kanal (47) entlang einer Kante der ersten Platte (40) gefertigt ist und einen im wesentlichen C-förmigen Querschnitt hat.

7. Tür nach einem der vorstehenden Ansprüche, **dadurch gekennzeichnet, dass** die erste Platte (40) integral eine Mehrzahl von Halteclips (52) aufweist, um das Verbindungselement (48, 26) an der ersten Platte (40) selbst zu befestigen.

8. Tür nach einem der vorstehenden Ansprüche, **dadurch gekennzeichnet, dass** die erste Platte (40) integral zumindest eine Gleitführung (53) für das bewegliche Fenster (7) definiert.

9. Tür nach Anspruch 8, **dadurch gekennzeichnet, dass** die Führung (53) auf freitagende Weise von dem ersten Klammerabschnitt (44) der ersten Platte (40) vorragt.

## Revendications

1. Porte (1) pour un véhicule automobile comprenant :
- un cadre de support (2), qui quant à lui comprend une partie supérieure analogue à un cadre (3), qui délimite une ouverture de vitre (8), et une partie inférieure de type boîte (4), qui s'ouvre dans la direction de l'ouverture de vitre (8) elle-même et est définie par une paroi interne (13) et une paroi externe (14) reliées l'une à l'autre de manière périphérique ;
- une vitre mobile (7), qui peut coulisser entre une position abaissée, à laquelle elle est contenue à l'intérieur de la partie inférieure de type boîte (4), et une position élevée, à laquelle elle ferme l'ouverture de vitre (8) de ladite partie supérieure (3) ;
- un dispositif de lève-vitre (23) destiné à lever et baisser la vitre mobile (7), qui peut être inséré, à travers une section d'ouverture (16) de ladite paroi interne (13), à l'intérieur de ladite partie inférieure (4) et peut être fixé à la partie inférieure (4) elle-même ;
- une serrure (22) destinée à bloquer ladite porte (1) dans une position fermée, qui peut également être insérée, à travers ladite section d'ouverture (16) de ladite paroi interne (13), à l'intérieur de ladite partie inférieure (4) et peut être fixée à la partie inférieure (4) elle-même ;
- un premier panneau de finition interne (40) relié d'une manière amovible à une zone supérieure de ladite paroi interne (13) sur le côté opposé à celui faisant face à ladite paroi externe (14) et doté de premier et second moyens de fixation (44, 45) destinés à supporter ladite serrure (22) et ledit dispositif de lève-vitre (23) ; et
- un second panneau de finition interne (41) relié d'une manière amovible à la partie restante de ladite paroi interne (13) sur le même côté que ledit premier panneau (40) ;
ladite porte étant **caractérisée en ce que** ledit premier panneau (40) et lesdits premier et second moyens de fixation (44, 45) sont composés d'un seul tenant par moulage et définissent de manière intégrée au moins un canal (47, 51) destiné à loger au moins un élément de liaison de forme allongée (48, 26) relié à au moins un élément entre ladite serrure (22) et ledit dispositif de lève-vitre (23).

2. Porte selon la revendication 1, **caractérisée en ce que** ledit premier panneau (40) comprend une partie principale (43) destinée à recouvrir ladite zone supérieure de ladite paroi interne (13) et une première partie de support (44) et une seconde partie de support (45) dépassant en porte-à-faux de ladite partie principale (43), lesquelles définissent, respectivement, lesdits premier et second moyens de fixation qui sont insérés, en utilisation, à l'intérieur de ladite partie inférieure (4) à travers ladite section d'ouverture (16).

3. Porte selon la revendication 1 ou la revendication 2, **caractérisée en ce que** ledit premier panneau (40) définit un emplacement (50) destiné à loger une poignée (27) pour ouvrir la porte, et ledit élément de liaison (26) relie ladite poignée (27) à ladite serrure (22).

4. Porte selon la revendication 3, **caractérisée en ce que** ledit canal (51) est créé au moins le long de ladite première partie de support (44) dudit premier panneau (40).

5. Porte selon la revendication 1 ou la revendication 2, **caractérisée en ce que** ledit élément de liaison (26) comprend au moins un câble électrique (48).

6. Porte selon la revendication 5, **caractérisée en ce que** ledit canal (47) est créé le long d'un bord dudit premier panneau (40) et présente une section transversale essentiellement en forme de C.

7. Porte selon l'une quelconque des revendications précédentes, **caractérisée en ce que** ledit premier panneau (40) comprend de manière intégrée une pluralité de pinces de retenue (52) destinées à fixer ledit élément de liaison (48, 26) audit premier panneau (40) elle-même.

8. Porte selon l'une quelconque des revendications précédentes, **caractérisée en ce que** ledit premier panneau (40) définit de manière intégrée au moins une glissière de guidage (53) pour ladite vitre mobile (7).

9. Porte selon la revendication 8, **caractérisée en ce que** ladite glissière de guidage (53) dépasse en porte-à-faux de ladite première partie de support (44) dudit premier panneau (40).
